# EUROPEAN PATENT SPECIFICATION

(11) **EP 2 620 216 B1**
(45) Date of publication and mention of the grant of the patent: **29.08.2018**
(21) Application number: 11826575.0
(22) Date of filing: 20.09.2011
(51) Int. Cl.: B01J 47/12, B01J 47/018, B01J 47/00, B01J 49/08, B01J 49/00, B01D 61/46, C02F 1/42, C02F 1/44, C02F 1/469, B01D 61/48

(54) **POROUS ION EXCHANGER, WATER TREATMENT DEVICE, HOT WATER SUPPLY APPARATUS, AND METHOD OF PRODUCING POROUS ION EXCHANGER**
PORÖSER IONENAUSTAUSCHER, WASSERBEHANDLUNGSVORRICHTUNG, HEISSWASSERVERSORGUNGSGERÄT, UND VERFAHREN ZUR HERSTELLUNG EINES PORÖSEN IONENAUSTAUSCHERS
ÉCHANGEUR D'IONS POREUX, DISPOSITIF DE TRAITEMENT D'EAU, DISPOSITIF D'ALIMENTATION EN EAU CHAUDE, ET PROCÉDÉ DE FABRICATION D'UN ÉCHANGEUR D'IONS POREUX

(30) Priority: 10.06.2011 JP 2011129888; 21.09.2010 JP 2010210386
(43) Date of publication of application: 31.07.2013
(73) Proprietor: Panasonic Corporation, Osaka 571-8501 (JP)
(72) Inventor: UNO, Katsuhiko, Chuo-ku Osaka 540-6207 (JP); SASABE, Shigeru, Chuo-ku Osaka 540-6207 (JP); SHIMATO, Takaaki, Chuo-ku Osaka 540-6207 (JP); YAMADA, Muneto, Chuo-ku Osaka 540-6207 (JP); SHIMA, Michihiro, Chuo-ku Osaka 540-6207 (JP); OHAMA, Masahiro, Chuo-ku Osaka 540-6207 (JP)
(74) Representative: Eisenführ Speiser
(86) International application number: PCT/JP2011/005278
(87) International publication number: WO 2012/039127

(56) References cited:
- EP-A1- 1 106 241
- EP-A1- 2 708 514
- JP-A- H0 342 046
- JP-A- H07 204 429
- JP-A- 2000 510 510
- JP-A- 2002 095 978
- JP-A- 2008 188 518
- JP-A- 2008 507 406
- JP-A- 2009 505 821
- JP-A- 2010 201 346
- JP-U- S60 147 643
- US-A1- 2006 016 685

## Description

### Technical Field

The present invention relates to a porous ion exchanger for use in adsorbing, condensing, separating, and removing impurities and the like contained in a liquid or a gas. The present invention particularly relates to a porous ion exchanger for use in obtaining softened water by removing hardness components from water, and to a method of producing the porous ion exchanger. The present invention further relates to a water treatment device and a hot water supply apparatus, which are configured to automatically perform regeneration treatment of the porous ion exchanger and usable for a long term without requiring maintenance by a user.

### Background Art

In water treatment devices, a joint product (sintered body) that is obtained by sintering an ion-exchange resin and a thermoplastic resin together is used as an adsorptive material (see Patent Literature 1, for example). Patent Literature 1 discloses a joint product that is obtained by sintering ion-exchange resin particles into a porous matrix of a thermoplastic resin. Accordingly, the more the amount of ion-exchange resin to be injected, the higher the ion exchange capacity.

One of such known sintered body production methods is a method in which functional groups are joined together through graft polymerization (see Patent Literature 2, for example). Patent Literature 2 discloses a sintered body production method in which: a cross-linked layer of a graft polymer chain is formed on the surface of a polyolefin resin particle sintered body; and then functional groups such as an ion-exchange group and a chelate group are joined to the graft polymer chain. Accordingly, elution of impurities is suppressed.

Further, there is a known textured membrane including an anion-exchange layer adjoining a cation-exchange layer (see Patent Literature 3, for example). Fig. 12 is a schematic diagram showing a schematic structure of a textured membrane (electrochemical cell) disclosed in Patent Literature 3.

As shown in Fig. 12, Patent Literature 3 discloses a textured membrane 105 including a cation-exchange layer 101 and an anion-exchange layer 102 adjoining the cation-exchange layer 101. The textured membrane 105 has spaced-apart peaks 103 and spaced-apart valleys 104. The peaks 103 and valleys 104 of the textured membrane 105 contribute to an increase in the surface area of the membrane, so that the rate of hardness component adsorption by the textured membrane 105 when water containing hardness components is supplied to the textured membrane 105 is increased. Moreover, when a plurality of textured membranes 105 are stacked, the peaks 103 and the valleys 104 form treatment water passages therebetween, the treatment water passages extending as indicated by arrow 106. Such a structure makes it possible to reduce pressure loss.

Patent Literature 3 discloses an electrochemical cell formed such that electrodes 107 and 108 are disposed at respective sides of the textured membrane 105. Patent Literature 3 discloses that a voltage is applied to both electrodes of the electrochemical cell in the presence of water, and as a result, water is dissociated and H⁺ and OH⁻ are generated at an interface 109 between the cation-exchange layer 101 and the anion-exchange layer 102. Cations adsorbed to the cation-exchange layer 101 are replaced by the generated H⁺ and anions adsorbed to the anion-exchange layer 102 are replaced by the generated OH⁻. In this manner, the cation-exchange layer 101 and the anion-exchange layer 102 can be regenerated. Therefore, the electrochemical cell disclosed in Patent Literature 3 does not require conventional regeneration using chemical agents.

Patent Literature 4 discloses an electrodialyzer comprising a membrane prepared by joining a first and a second ion-exchange composite together, whereby the first ion-exchange composite is prepared by forming a second mixture, in which binder particles (low-density polyethylene and ethylene-propylene-diene rubber) and a strong-basic anion exchange resin (Diaion SA-10A) are mixed, kneaded and subjected to melt pressing under heating by a flat press at 160°C, to obtain an anion exchange membrane having a thickness of 500 µm, whereby the second ion-exchange composite is prepared by forming a fourth mixture, in which binder particles (low-density polyethylene and ethylene-propylene-diene rubber) and a strong-basic anion exchange resin (Diaion PA361) are mixed, kneaded and subjected to melt pressing under heating by a flat press at 160°C, to obtain an anion exchange membrane having a thickness of 300 µm and a porosity of 45%, whereby the joining of the first and the second ion-exchange composite takes place by press-bonding at 140°C the ion-exchange composites to obtain a multi-layer anion exchange membrane having a thickness of 780 µm.

### Citation List

### Patent Literature

PTL 1: Japanese Laid-Open Patent Application Publication No. 7-204429
PTL 2: Japanese Laid-Open Patent Application Publication No. 2009-235417
PTL 3: Japanese National Phase PCT Laid-Open Publication No. 2008-507406
PTL 4: European Patent Application EP 1 106 241 A1

### Summary of Invention

### Technical Problem

However, in the case of the joint product disclosed in Patent Literature 1 and the sintered body disclosed in Patent Literature 2, the hardness of water is removed by adsorbing hardness components to an ion-exchange resin. Therefore, when the removal of hardness components from water can no longer be performed due to adsorption saturation of the ion-exchange resin, it is necessary to regenerate the ion-exchange resin by removing the hardness components adsorbed to the ion-exchange resin by using common salt or acid.

Further, in the case of the textured membrane 105 disclosed in Patent Literature 3, a mixture of an ion-exchange resin powder and a polyethylene binder is mixed by a Banbury mixer. Accordingly, a membrane sheet to be formed (i.e., cation-exchange layer 101 or anion-exchange layer 102) is not porous. For this reason, in the case of the textured membrane 105 disclosed in Patent Literature 3, ion exchange occurs at the surface of the membrane, and therefore, the ion exchange capacity is limited. Thus, even with use of the textured membrane 105 disclosed in Patent Literature 3, it is difficult to treat a large amount of water.

The present invention has been made to solve the above problems. An object of the present invention is to provide a porous ion exchanger, a water treatment device, and a hot water supply apparatus, which are capable of efficiently treating a high flow rate of water and which can be made compact, and to provide a method of producing the porous ion exchanger.

### Solution to Problem

In order to solve the above conventional problems, a porous ion exchanger according to claim 1 is provided.

According to the above, the porosity of the first porous ion-exchange composite and the second porous ion-exchange composite can be obtained, and the ion exchange capacity of the ion-exchange resin per unit amount can be increased, which makes it possible to treat a large amount of water.

Since the first porous ion-exchange composite and the second porous ion-exchange composite are joined together, when a voltage is applied, water is dissociated at a joint surface between the first porous ion-exchange composite and the second porous ion-exchange composite, and hydrogen ions and hydroxide ions are generated, accordingly. The first porous ion-exchange composite and the second porous ion-exchange composite can be regenerated by replacing cations and anions adsorbed to the ion-exchange resin with the generated hydrogen ions and hydroxide ions.

A water treatment device according to the present invention includes: the above porous ion exchanger; a casing provided with a water inlet and a water outlet; and at least one pair of electrodes disposed within the casing. The porous ion exchanger is disposed between the pair of electrodes.

A hot water supply apparatus according to the present invention includes the above water treatment device.

A method of producing a porous ion exchanger according to claim 14 is equally provided.

### Advantageous Effects of Invention

The porous ion exchanger, the water treatment device, the hot water supply apparatus, and the method of producing a porous ion exchanger, according to the present invention, are capable of efficiently treating a large amount of water and allow the device/apparatus size to be compact.

The above object, other objects, features, and advantages of the present invention will be made clear by the following detailed description of preferred embodiments with reference to the accompanying drawings.

### Brief Description of Drawings

[Fig. 1] Fig. 1 is a schematic diagram showing a schematic structure of a porous ion exchanger according to Embodiment 1 (not according to the present invention).
[Fig. 2] Fig. 2 is a schematic diagram showing a schematic structure of a porous ion exchanger according to Embodiment 2 (not according to the present invention).
[Fig. 3] Fig. 3 is a schematic diagram showing a schematic structure of a porous ion exchanger according to a variation of Embodiment 2 (not according to the present invention).
[Fig. 4] Fig. 4 is a schematic diagram showing a schematic structure of a porous ion exchanger according to Embodiment 3 of the present invention.
[Fig. 5] Fig. 5 is a schematic diagram showing a schematic structure of a porous ion exchanger according to a variation of Embodiment 3 of the present invention.
[Fig. 6] Fig. 6 is a schematic diagram showing a schematic structure of a porous ion exchanger according to Embodiment 4 (not according to the present invention).
[Fig. 7] Fig. 7 is a schematic diagram showing a schematic structure of a porous ion exchanger according to Variation 1 of Embodiment 4 (not according to the present invention).
[Fig. 8] Fig. 8 is a schematic diagram showing a schematic structure of a porous ion exchanger according to Variation 2 of Embodiment 4 (not according to the present invention).
[Fig. 9] Fig. 9 is a schematic diagram showing a schematic configuration of a water treatment device according to Embodiment 5 of the present invention.
[Fig. 10] Fig. 10 is a schematic diagram showing a schematic configuration of a hot water supply apparatus according to Embodiment 6 of the present invention.
[Fig. 11] Fig. 11 is a schematic diagram showing a schematic configuration of a hot water supply apparatus according to Embodiment 7 of the present invention.

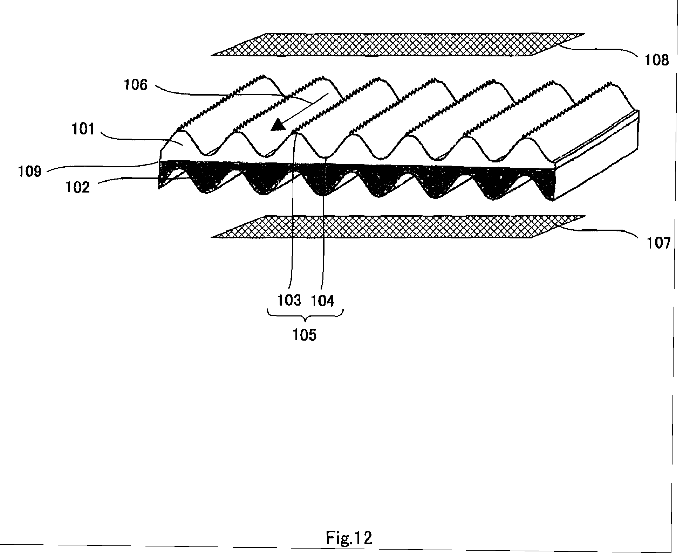

[Fig. 12] Fig. 12 is a schematic diagram showing a schematic structure of a textured membrane (electrochemical cell) disclosed in Patent Literature 3.

### Description of Embodiments

Hereinafter, embodiments are described with reference to the drawings. In the drawings, the same or corresponding components are denoted by the same reference signs. In the description below, there are cases where repetition of the same description is avoided. In the drawings, components necessary for describing the present invention are shown, and the other components are omitted in some cases. Further, the present invention is not limited by the embodiments below.

### (Embodiment 1)

A porous ion exchanger according to Embodiment 1 (not according to the present invention) serves as an example where the porous ion exchanger includes: a first porous ion-exchange composite which is obtained by forming a second mixture, in which first binder particles and first ion-exchange resin are mixed, into a sheet shape, and sintering the first binder particles and the first ion-exchange resin particles; and a second porous ion-exchange composite which is obtained by forming a fourth mixture, in which second binder particles and second ion-exchange resin are mixed, into a sheet shape, and sintering the second binder particles and the second ion-exchange resin particles. The porous ion exchanger is obtained by joining the first porous ion-exchange composite and the second porous ion-exchange composite together.

In the porous ion exchanger according to Embodiment 1, the first porous ion-exchange composite and the second porous ion-exchange composite may be joined together through heating.

In the porous ion exchanger according to Embodiment 1, a diameter of the binder particles may be less than or equal to a diameter of the first ion-exchange resin particles and a diameter of the second ion-exchange resin particles.

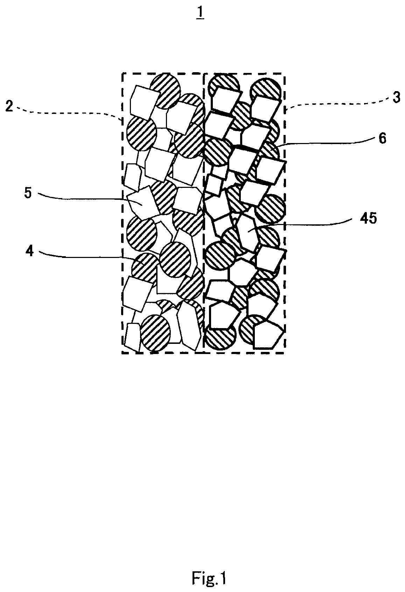

Hereinafter, an example of the porous ion exchanger according to Embodiment 1 is described in detail with reference to Fig. 1.

### [Structure of Porous Ion Exchanger]

Fig. 1 is a schematic diagram showing a schematic structure of the porous ion exchanger according to Embodiment 1.

As shown in Fig. 1, a porous ion exchanger 1 according to Embodiment 1 includes a porous cation-exchange composite (first porous ion-exchange composite) 2 and a porous anion-exchange composite (second porous ion-exchange composite) 3. The porous cation-exchange composite 2 includes cation-exchange resin particles (first ion-exchange resin particles) 4 and first binder particles (thermoplastic resin particles) 5. The porous anion-exchange composite 3 includes anion-exchange resin particles 6 and second binder particles (thermoplastic resin particles) 45. It should be noted that the thermoplastic resin particles serving as the first binder particles 5 and the thermoplastic resin particles serving as the second binder particles 45 may be of the same kind of thermoplastic resin, or may be of different kinds of thermoplastic resins.

Polyolefin resins, for example, polyethylene, polypropylene, ethylene-propylene copolymers, ethylene-vinyl acetate copolymers, and ethylene-acrylic acid copolymers, can be used as the thermoplastic resin. A strongly acidic cation-exchange resin including an exchange group -SO₃H is suitably used as a cation-exchange resin, and a strongly basic ion-exchange resin including an exchange group -NR₃OH is suitably used as an anion-exchange resin. However, as will hereinafter be described, in a case where a voltage is applied to the porous ion exchanger 1, a weakly acidic cation-exchange resin including an exchange group -RCOOH and a weakly basic anion-exchange resin including an exchange group -NR₂ may be used instead.

From the standpoint of facilitating the mixture and dispersion of the cation-exchange resin particles 4 and the first binder particles 5, or of the anion-exchange resin particles 6 and the second binder particles 45, it is desirable that the particle diameter of the thermoplastic resin should be less than or equal to the diameter of the cation-exchange resin particles 4 and the diameter of the anion-exchange resin particles 6. If the particle diameter of the thermoplastic resin is greater than the diameter of the cation-exchange resin particles 4 and the diameter of the anion-exchange resin particles 6, then it is likely that the diameter of pores formed among the first binder particles 5 or among the second binder particles 45 becomes greater than the diameter of the cation-exchange resin particles 4 or the diameter of the anion-exchange resin particles 6, which results in a risk that even if the first binder particles 5 or the second binder particles 45 are sintered, the cation-exchange resin particles 4 or the anion-exchange resin particles 6 cannot be immobilized, causing detachment of the cation-exchange resin particles 4 or the anion-exchange resin particles 6.

In Embodiment 1, the particle diameter of the thermoplastic resin used as the first binder particles 5 or the second binder particles 45 is preferably in a range from several tens of µm to several hundreds of µm since the first binder particles 5 or the second binder particles 45 are to be sintered. In a case, for example, where the porous ion exchanger 1 is used as a water treatment device for removing hardness components from water, the rate of hardness component adsorption increases and the hardness removal effect is improved in accordance with a decrease in the particle diameter of the thermoplastic resin; however, pressure loss increases in accordance with a decrease in the particle diameter of the thermoplastic resin. Therefore, it is necessary to choose an optimal particle diameter of the thermoplastic resin.

Moreover, from the standpoint of sufficiently immobilizing the cation-exchange resin particles 4, the amount of cation-exchange resin particles 4 contained in the porous cation-exchange composite 2 is preferably less than or equal to 60 wt % of the total weight of the porous cation-exchange composite 2, and more preferably, less than or equal to 50 wt % of the total weight of the porous cation-exchange composite 2. Furthermore, from the standpoint of maintaining the intended ion exchange performance of the porous cation-exchange composite 2 and making the porous cation-exchange composite 2 compact, the amount of cation-exchange resin particles 4 contained in the porous cation-exchange composite 2 is preferably greater than or equal to 10 wt % of the total weight of the porous cation-exchange composite 2, and more preferably, greater than or equal to 30 wt % of the total weight of the porous cation-exchange composite 2.

Similarly, the amount of anion-exchange resin particles 6 contained in the porous anion-exchange composite 3 is preferably in a range from 10 to 60 wt % of the total weight of the porous anion-exchange composite 3, and desirably in a range from 30 to 50 wt % of the total weight of the porous anion-exchange composite 3.

### [Method of Producing Porous Ion Exchanger]

Next, a method of producing the porous ion exchanger 1 according to Embodiment 1 is described.

The porous cation-exchange composite 2 and the porous anion-exchange composite 3 can be produced by a method that is the same as a conventional method of producing a thermoplastic resin sintered body. It should be noted that since the method of producing the porous anion-exchange composite 3 is carried out in the same manner as the method of producing the porous cation-exchange composite 2, a detailed description of the method of producing the porous anion-exchange composite 3 is omitted.

The porous cation-exchange composite 2 can be produced, for example, in the following method: a second mixture in which the cation-exchange resin particles 4 and the first binder particles 5 are mixed is injected into a mold of a predetermined gap (equal to the thickness of the porous cation-exchange composite 2); and the second mixture is heated to a temperature close to the melting point of the thermoplastic resin in a furnace. Alternatively, the porous cation-exchange composite 2 may be produced in the following method: the thickness of the second mixture is restricted by means of a roll; and then the second mixture is heated to a temperature close to the melting point of the thermoplastic resin in a tunnel furnace or the like, which is followed by molding. In this manner, the cation-exchange resin particles 4 can be immobilized in a matrix of first binder particles 5. That is, the porosity of the porous cation-exchange composite 2 can be obtained.

Then, the porous cation-exchange composite 2 and the porous anion-exchange composite 3 are stacked, and thereafter, the stack is heated at a temperature close to the melting point of the thermoplastic resin with no load or a small load added thereto. As a result, the porous cation-exchange composite 2 and the porous anion-exchange composite 3 are joined together, and thus the porous ion exchanger 1 can be obtained.

In the porous ion exchanger 1 according to Embodiment 1 with the above-described structure, the porous ion-exchange composites of different polarities are joined together. Therefore, not only hardness components (cations) but also anions can be removed through adsorption. Further, as will hereinafter be described, in the porous ion exchanger 1 according to Embodiment 1, a voltage is applied to the porous ion exchanger 1 in the presence of water, and as a result, water is dissociated at the joint surface between the porous cation-exchange composite 2 and the porous anion-exchange composite 3, and hydrogen ions and hydroxide ions are generated, accordingly. Cations adsorbed to the cation-exchange resin particles 4 and anions adsorbed to the anion-exchange resin particles 6 are replaced by the generated hydrogen ions and hydroxide ions, respectively, and thereby the porous cation-exchange composite 2 and the porous anion-exchange composite 3 can be regenerated.

Further, in the porous ion exchanger 1 according to Embodiment 1, the porous cation-exchange composite 2 and the porous anion-exchange composite 3 have porosity. Therefore, as compared to the textured membrane 105 disclosed in Patent Literature 3, the ion exchange capacity per unit amount can be increased, and the rate of adsorption of cations and anions can be increased. This makes it possible to efficiently treat a large amount of water.

Still further, in the porous ion exchanger 1 according to Embodiment 1, the cation-exchange resin particles 4 are immobilized in gaps among the sintered first binder particles 5, and the anion-exchange resin particles 6 are immobilized in gaps among the sintered second binder particles 45. Therefore, detachment of the cation-exchange resin particles 4 or the anion-exchange resin particles 6 can be suppressed.

### (Embodiment 2)

A porous ion exchanger according to Embodiment 2 (not according to the present invention) serves as an example where the porous ion exchanger includes a water-permeable and sheet-shaped first substrate, and the first substrate is joined to the first porous ion-exchange composite.

In the porous ion exchanger according to Embodiment 2, the first substrate may be formed of a nonwoven fabric, and an opening size of the nonwoven fabric may be smaller than a diameter of the first ion-exchange resin particles or a diameter of the second ion-exchange resin particles.

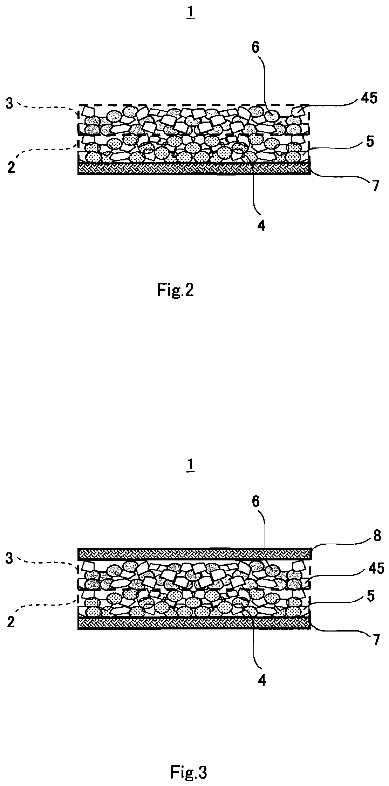

Hereinafter, an example of the porous ion exchanger according to Embodiment 2 is described in detail with reference to Fig. 2.

### [Structure of Porous Ion Exchanger]

Fig. 2 is a schematic diagram showing a schematic structure of the porous ion exchanger according to Embodiment 2.

As shown in Fig. 2, the fundamental structure of the porous ion exchanger 1 according to Embodiment 2 is the same as the fundamental structure of the porous ion exchanger 1 according to Embodiment 1. However, the porous ion exchanger 1 according to Embodiment 2 is different from the porous ion exchanger 1 according to Embodiment 1, in that the porous ion exchanger 1 according to Embodiment 2 further includes a first substrate 7. Specifically, in the porous ion exchanger 1 according to Embodiment 2, the first substrate 7 is joined to one main surface of the porous cation-exchange composite 2, the one main surface being positioned at the opposite side to another main surface where the porous cation-exchange composite 2 is joined to the porous anion-exchange composite 3.

The first substrate 7 is water-permeable and sheet-shaped. A nonwoven fabric formed of highly water-resistant polypropylene, hydrophilically treated polypropylene, PET, or the like can be used as the first substrate 7. The fiber diameter and the opening size of the nonwoven fabric may be chosen based on the diameter of the cation-exchange resin particles 4 or the diameter of the anion-exchange resin particles 6.

From the standpoint of suppressing the detachment of the cation-exchange resin particles 4 or the anion-exchange resin particles 6 from the porous ion exchanger 1, the opening size of the nonwoven fabric may be smaller than the diameter of the cation-exchange resin particles 4 or the diameter of the anion-exchange resin particles 6. This makes it possible to suppress the detachment of the cation-exchange resin particles 4 or the anion-exchange resin particles 6, and to suppress a decrease in ion exchange capacity. As a result, the porous ion exchanger 1 can be stably used for a long term.

### [Method of Producing Porous Ion Exchanger]

Next, a method of producing the porous ion exchanger 1 according to Embodiment 2 is described.

The method of producing the porous ion exchanger 1 according to Embodiment 2 is fundamentally the same as the method of producing the porous ion exchanger 1 according to Embodiment 1. In the method of producing the porous ion exchanger 1 according to Embodiment 2, the first substrate 7 and the porous cation-exchange composite 2 are joined together as described below.

First, for example, a third mixture in which the cation-exchange resin particles 4 and the first binder particles 5 are mixed is placed on a main surface of the first substrate 7. Then, the thickness of the third mixture is restricted by means of a roll. Thereafter, the third mixture is heated to a temperature close to the melting point of the thermoplastic resin in a tunnel furnace or the like, and thus the cation-exchange resin particles 4 and the first binder particles 5 are sintered. In this manner, the porous cation-exchange composite 2 may be obtained and the porous cation-exchange composite 2 may be joined to the first substrate 7.

Further, for example, as described in Embodiment 1, the porous cation-exchange composite 2 and the porous anion-exchange composite 3 may be produced separately; then the first substrate 7, the porous cation-exchange composite 2, and the porous anion-exchange composite 3 may be stacked; and the stack may be heated at a temperature close to the melting point of the thermoplastic resin with no load or a small load added thereto, and thereby the first substrate 7, the porous cation-exchange composite 2, and the porous anion-exchange composite 3 may be joined together.

Although in the above description the first substrate 7, the porous cation-exchange composite 2, and the porous anion-exchange composite 3 are joined at one time, the present embodiment is not thus limited. As an alternative, the first substrate 7 and the porous cation-exchange composite 2 may be joined first, and then the porous anion-exchange composite 3 may be further joined thereto. As another alternative, the porous cation-exchange composite 2 and the porous anion-exchange composite 3 may be joined first, and then the first substrate 7 may be further joined thereto.

The porous ion exchanger 1 according to Embodiment 2 with the above-described structure provides the same operational advantages as those provided by the porous ion exchanger 1 according to Embodiment 1.

Since the porous ion exchanger 1 according to Embodiment 2 includes the first substrate 7, the surface of the porous cation-exchange composite 2 is protected by the first substrate 7.

Accordingly, in a case where water flows from a main surface of the porous anion-exchange composite 3, the main surface being not joined to the porous cation-exchange composite 2, toward a main surface of the first substrate 7, the main surface being not joined to the porous cation-exchange composite 2, even if the cation-exchange resin particles 4 or the anion-exchange resin particles 6 are detached from the porous cation-exchange composite 2 or the porous anion-exchange composite 3, the detached particles can be trapped by the first substrate 7, and thus the detachment of the cation-exchange resin particles 4 or the anion-exchange resin particles 6 from the porous ion exchanger 1 can be suppressed.

Further, in a case where water flows from the main surface of the first substrate 7, the main surface being not joined to the porous cation-exchange composite 2, toward the main surface of the porous anion-exchange composite 3, the main surface being not joined to the porous cation-exchange composite 2, the first substrate 7 alleviates pressure, friction, and the like that are caused by the water flowing to the porous cation-exchange composite 2 and to the porous anion-exchange composite 3. This makes it possible to suppress the detachment of the cation-exchange resin particles 4 or the anion-exchange resin particles 6 from the porous ion exchanger 1.

### [Variation]

Next, a variation of the porous ion exchanger according to Embodiment 2 is described.

The porous ion exchanger according to the variation of Embodiment 2 serves as an example where the porous ion exchanger includes a water-permeable and sheet-shaped second substrate, and the second substrate is joined to the second porous ion-exchange composite.

In the porous ion exchanger according to the present variation, the second substrate may be formed of a nonwoven fabric, and an opening size of the nonwoven fabric may be smaller than a diameter of the first ion-exchange resin particles or a diameter of the second ion-exchange resin particles.

Hereinafter, an example of the porous ion exchanger according to the present variation is described in detail with reference to Fig. 3.

Fig. 3 is a schematic diagram showing a schematic structure of the porous ion exchanger according to the variation of Embodiment 2 of the present invention.

As shown in Fig. 3, the fundamental structure of the porous ion exchanger 1 according to the present variation is the same as that of the porous ion exchanger 1 according to Embodiment 2. However, the porous ion exchanger 1 according to the present variation is different from the porous ion exchanger 1 according to Embodiment 2, in that the porous ion exchanger 1 according to the present variation includes a second substrate 8. Specifically, in the porous ion exchanger 1 according to the present variation, the second substrate 8 is joined to one main surface of the porous anion-exchange composite 3, the one main surface being positioned at the opposite side to another main surface which is joined to the porous cation-exchange composite 2.

The second substrate 8 is a water-permeable and sheet-shaped substrate. A nonwoven fabric formed of highly water-resistant polypropylene, hydrophilically treated polypropylene, PET, or the like can be used as the second substrate 8. The fiber diameter and the opening size of the nonwoven fabric may be chosen based on the diameter of the cation-exchange resin particles 4 or the diameter of the anion-exchange resin particles 6.

From the standpoint of suppressing the detachment of the cation-exchange resin particles 4 or the anion-exchange resin particles 6 from the porous ion exchanger 1, the opening size of the nonwoven fabric may be smaller than the diameter of the cation-exchange resin particles 4 or the diameter of the anion-exchange resin particles 6. This makes it possible to suppress the detachment of the cation-exchange resin particles 4 or the anion-exchange resin particles 6, and to suppress a decrease in ion exchange capacity. As a result, the porous ion exchanger 1 can be stably used for a long term.

The porous ion exchanger 1 according to the present variation with the above-described structure provides the same operational advantages as those provided by the porous ion exchanger 1 according to Embodiment 2. Since the porous ion exchanger 1 according to the present variation includes the second substrate 8, the surface of the porous anion-exchange composite 3 is protected by the second substrate 8. Accordingly, the porous ion exchanger 1 according to the present variation can further suppress the detachment of the cation-exchange resin particles 4 or the anion-exchange resin particles 6, and further suppress a decrease in ion exchange capacity, as compared to the porous ion exchanger 1 according to Embodiment 2.

It should be noted that since the porous ion exchanger 1 according to the present variation can be produced in the same manner as the porous ion exchanger 1 according to Embodiment 2, a detailed description of the production of the porous ion exchanger 1 according to the present variation is omitted.

### (Embodiment 3)

A porous ion exchanger according to Embodiment 3 of the present invention serves as an example where the porous ion exchanger includes: a first porous ion-exchange composite which is obtained by forming a first mixture, in which water-dispersed or solvent-dispersed first binder particles and first ion-exchange resin particles are mixed in paste form, into a sheet shape, and drying the first mixture; and a second porous ion-exchange composite which is obtained by forming a third mixture, in which water-dispersed or solvent-dispersed second binder particles and second ion-exchange resin particles are mixed in paste form, into a sheet shape, and drying the third mixture. The porous ion exchanger is obtained by joining the first porous ion-exchange composite and the second porous ion-exchange composite together.

The porous ion exchanger according to Embodiment 3 may include a water-permeable and sheet-shaped first substrate.

In the porous ion exchanger according to Embodiment 3, the first porous ion-exchange composite may be obtained by applying the first mixture onto the first substrate and drying the first mixture.

In the porous ion exchanger according to Embodiment 3, the second porous ion-exchange composite is obtained by applying the third mixture onto the first porous ion exchanger composite and drying the third mixture, and the first porous ion-exchange composite and the second porous ion-exchange composite are joined together.

In the porous ion exchanger according to Embodiment 3, a diameter of the binder particles may be less than or equal to a diameter of the first ion-exchange resin particles and a diameter of the second ion-exchange resin particles.

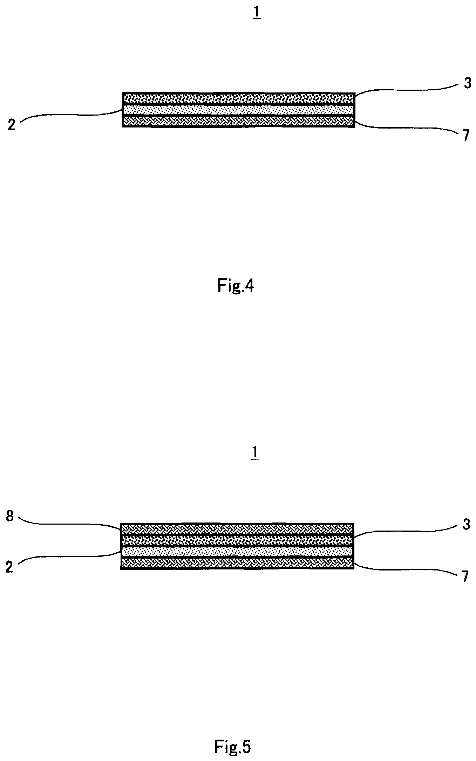

Hereinafter, an example of the porous ion exchanger according to Embodiment 3 is described in detail with reference to Fig. 4.

### [Structure of Porous Ion Exchanger]

Fig. 4 is a schematic diagram showing a schematic structure of the porous ion exchanger according to Embodiment 3 of the present invention.

As shown in Fig. 4, the fundamental structure of the porous ion exchanger 1 according to Embodiment 3 is the same as that of the porous ion exchanger 1 according to Embodiment 2. However, the porous ion exchanger 1 according to Embodiment 3 is different from the porous ion exchanger 1 according to Embodiment 2 in terms of the structures of the first binder particles 5 and the second binder particles 45 (which are not shown in Fig. 4).

Polyolefin resins, for example, polyethylene, polypropylene, ethylene-propylene copolymers, ethylene-vinyl acetate copolymers, ethylene-acrylic acid copolymers, polytetrafluoroethylene, and polyvinylidene fluoride, can be used as the first binder particles 5 and the second binder particles 45.

From the standpoint of increasing the surface area of the first binder particles 5 and increasing the ion exchange capacity of the cation-exchange resin particles 4, the diameter of the first binder particles 5 is in a range from submicron to several µm (100 nm to 3 µm). Similarly, from the standpoint of increasing the surface area of the second binder particles 45 and increasing the ion exchange capacity of the anion-exchange resin particles 6, the diameter of the second binder particles 45 is in a range from submicron to several µm (100 nm to 3 µm).

It should be noted that, in Embodiment 3, as will hereinafter be described, each porous ion-exchange composite is produced by drying a paste-form mixture of binder particles and ion-exchange resin particles. For this reason, particles having a smaller diameter than the first binder particles 5 and the second binder particles 45 used in Embodiment 1 can be used.

From the standpoint of allowing the cation-exchange resin particles 4 to sufficiently exert cation adsorption performance and sufficiently forming an interface between the cation-exchange resin particles 4 and the anion-exchange resin particles 6 at a joint surface between the porous cation-exchange composite 2 and the porous anion-exchange composite 3, the amount of first binder particles 5 contained in the porous cation-exchange composite 2 is preferably less than or equal to 50 wt % of the total weight of the porous cation-exchange composite 2. Moreover, from the standpoint of allowing the first binder particles 5 to function as a binder, the amount of first binder particles 5 contained in the porous cation-exchange composite 2 is preferably greater than or equal to 5 wt % of the total weight of the porous cation-exchange composite 2. Similarly, the amount of second binder particles 45 contained in the porous anion-exchange composite 3 is preferably in a range from 5 to 50 wt % of the total weight of the porous anion-exchange composite 3.

### [Method of Producing Porous Ion Exchanger]

Next, a method of producing the porous ion exchanger 1 according to Embodiment 3 is described.

A first mixture, in which cation-exchange resin particles 4 and water-dispersed or solvent-dispersed first binder particles 5 are mixed in paste form (alternatively in ink or clay from), is applied onto a main surface of the first substrate 7. Then, the first mixture is dried by natural drying or by being heated at a temperature lower than the melting point of the first binder particles 5, and thus the porous cation-exchange composite 2 is produced and the porous cation-exchange composite 2 and the first substrate 7 are joined together.

Next, a third mixture, in which anion-exchange resin particles 6 and water-dispersed or solvent-dispersed second binder particles 45 are mixed in paste form (alternatively in ink or clay form), is applied to a main surface of the porous cation-exchange composite 2, the main surface being not joined to the first substrate 7. Then, the third mixture is dried by natural drying or by being heated at a temperature lower than the melting point of the second binder particles 45, and thus the porous anion-exchange composite 3 is produced and the porous cation-exchange composite 2 and the porous anion-exchange composite 3 are joined together. In this manner, the porous ion exchanger 1 is produced.

Alternatively, the porous ion exchanger 1 may be produced in the following method: first, the porous cation-exchange composite 2 and the porous anion-exchange composite 3 are produced separately; then the first substrate 7, the porous cation-exchange composite 2, and the porous anion-exchange composite 3 are stacked; and the stack is heated to a temperature close to the melting point of the first binder particles 5 and the second binder particles 45, and thereby the first substrate 7, the porous cation-exchange composite 2, and the porous anion-exchange composite 3 are joined together. The porous ion exchanger 1 may be produced in such an alternative method.

The porous ion exchanger 1 according to Embodiment 3 with the above-described structure provides the same operational advantages as those provided by the porous ion exchanger 1 according to Embodiment 2. Further, since the diameter of the first binder particles 5 and the diameter of the second binder particles 45 of the porous ion exchanger 1 according to Embodiment 3 are smaller, the ion exchange capacity per unit amount of the cation-exchange resin particles 4 and the anion-exchange resin particles 6 can be further increased. This makes it possible to efficiently treat a larger amount of water.

In the porous ion exchanger 1 according to Embodiment 3, the first mixture and the third mixture in paste form are used, which makes it possible to reduce the thickness of the porous cation-exchange composite 2 and the porous anion-exchange composite 3.

Accordingly, in a case where a plurality of porous ion exchangers 1 according to Embodiment 3 are arranged in a casing, the size of the casing can be reduced. Therefore, in a case where the porous ion exchanger 1 according to Embodiment 3 is used in a water treatment device or in a hot water supply apparatus, such a device or apparatus can be made compact.

Further, in a case where a plurality of porous ion exchangers 1 according to Embodiment 3 are arranged in a casing whose size is not reduced, an increased number of porous ion exchangers 1 can be arranged in the casing, which makes it possible to efficiently treat a larger amount of water. If the number of porous ion exchangers 1 to be arranged increases, then the number of interfaces formed between the porous cation-exchange composites 2 and the porous anion-exchange composites 3 increases, which makes it possible to further improve regeneration performance at the time of performing regeneration treatment of the porous ion exchanger 1.

### [Variation]

Next, a variation of the porous ion exchanger according to Embodiment 3 is described.

The porous ion exchanger according to the variation of Embodiment 3 serves as an example where the porous ion exchanger includes a water-permeable and sheet-shaped second substrate.

In the porous ion exchanger according to the present variation, the second porous ion-exchange composite may be obtained by applying the third mixture onto the second substrate and drying the third mixture.

In the porous ion exchanger according to the present variation, the first porous ion-exchange composite may be obtained by applying the first mixture onto the second porous ion exchanger and drying the first mixture, and the first porous ion-exchange composite and the second porous ion-exchange composite may be joined together.

In the porous ion exchanger according to the present variation, the second substrate may be formed of a nonwoven fabric, and an opening size of the nonwoven fabric may be smaller than a diameter of the first ion-exchange resin particles or a diameter of the second ion-exchange resin particles.

Hereinafter, an example of the porous ion exchanger according to the present variation is described in detail with reference to Fig. 5.

### [Structure of Porous Ion Exchanger]

Fig. 5 is a schematic diagram showing a schematic structure of the porous ion exchanger according to the variation of Embodiment 3 of the present invention.

As shown in Fig. 5, the fundamental structure of the porous ion exchanger 1 according to the present variation is the same as that of the porous ion exchanger 1 according to Embodiment 3. However, the porous ion exchanger 1 according to the present variation is different from the porous ion exchanger 1 according to Embodiment 3, in that the porous ion exchanger 1 according to the present variation includes the second substrate 8. It should be noted that since the structure of the second substrate 8 of the porous ion exchanger 1 according to the present variation is the same as the structure of the second substrate 8 of the porous ion exchanger 1 according to the variation of Embodiment 2, a detailed description of the second substrate 8 is omitted.

### [Method of Producing Porous Ion Exchanger]

Next, a method of producing the porous ion exchanger 1 according to the present variation is described.

A third mixture, in which anion-exchange resin particles 6 and water-dispersed or solvent-dispersed second binder particles 45 are mixed in paste form (alternatively in ink or clay form), is applied onto a main surface of the second substrate 8. Then, the third mixture is dried by natural drying or by being heated at a temperature lower than the melting point of the second binder particles 45, and thus the porous anion-exchange composite 3 is produced and the porous anion-exchange composite 3 and the second substrate 8 are joined together.

Next, a first mixture, in which cation-exchange resin particles 4 and water-dispersed or solvent-dispersed first binder particles 5 are mixed in paste form (alternatively in ink or clay form), is applied to a main surface of the porous anion-exchange composite 3, the main surface being not joined to the second substrate 8. Then, the first mixture is dried by natural drying or by being heated at a temperature lower than the melting point of the first binder particles 5, and thus the porous cation-exchange composite 2 is produced and the porous cation-exchange composite 2 and the porous anion-exchange composite 3 are joined together.

Next, the first substrate 7 is placed on a main surface of the porous cation-exchange composite 2, the main surface being not joined to the porous anion-exchange composite 3, and is heated to a temperature close to the melting point of the first binder particles 5 and the second binder particles 45, and thereby the first substrate 7, the porous cation-exchange composite 2, the porous anion-exchange composite 3, and the second substrate 8 are joined together. In this manner, the porous ion exchanger 1 is produced.

Alternatively, the porous ion exchanger 1 may be produced in the following method: first, the porous cation-exchange composite 2 and the porous anion-exchange composite 3 are produced separately; then the first substrate 7, the porous cation-exchange composite 2, the porous anion-exchange composite 3, and the second substrate 8 are stacked; and the stack is heated to a temperature close to the melting point of the first binder particles 5 and the second binder particles 45, and thereby the first substrate 7, the porous cation-exchange composite 2, and the porous anion-exchange composite 3 are joined together. The porous ion exchanger 1 may be produced in such an alternative method.

Further alternatively, the porous ion exchanger 1 may be produced in the method described below. A third mixture, in which anion-exchange resin particles 6 and water-dispersed or solvent-dispersed second binder particles 45 are mixed in paste form (alternatively in ink or clay form), is applied onto a main surface of the second substrate 8. Then, the third mixture is dried by natural drying or by being heated at a temperature lower than the melting point of the second binder particles 45, and thus the porous anion-exchange composite 3 is produced and the porous anion-exchange composite 3 and the second substrate 8 are joined together.

Next, a first mixture, in which cation-exchange resin particles 4 and water-dispersed or solvent-dispersed first binder particles 5 are mixed in paste form (alternatively in ink or clay form), is applied onto a main surface of the first substrate 7. Then, the first mixture is dried by natural drying or by being heated at a temperature lower than the melting point of the first binder particles 5, and thus the porous cation-exchange composite 2 is produced and the porous cation-exchange composite 2 and the first substrate 7 are joined together.

Subsequently, the porous cation-exchange composite 2 and the first substrate 7 joined together, and the porous anion-exchange composite 3 and the second substrate 8 joined together, are stacked. The stack is heated to a temperature close to the melting point of the first binder particles 5 and the second binder particles 45, and thereby the first substrate 7, the porous cation-exchange composite 2, and the porous anion-exchange composite 3 are joined together. The porous ion exchanger 1 may be produced in such an alternative method.

The porous ion exchanger 1 according to the present variation with the above-described structure provides the same operational advantages as those provided by the porous ion exchanger 1 according to Embodiment 3. Since the porous ion exchanger 1 according to the present variation includes the second substrate 8, the surface of the porous anion-exchange composite 3 is protected by the second substrate 8. Accordingly, the porous ion exchanger 1 according to the present variation can further suppress the detachment of the cation-exchange resin particles 4 or the anion-exchange resin particles 6, and further suppress a decrease in ion exchange capacity, as compared to the porous ion exchanger 1 according to Embodiment 3.

### (Embodiment 4)

A porous ion exchanger according to Embodiment 4 (not according to the present invention) serves as an example where the porous ion exchanger includes: a first porous ion-exchange composite which is obtained by forming a first mixture, in which water-dispersed or solvent-dispersed first binder particles and first ion-exchange resin particles are mixed in paste form, into a sheet shape, and drying the first mixture; and a second porous ion-exchange composite which is obtained by forming a fourth mixture, in which second binder particles and second ion-exchange resin are mixed, into a sheet shape, and sintering the second binder particles and the second ion-exchange resin particles. The porous ion exchanger is obtained by joining the first porous ion-exchange composite and the second porous ion-exchange composite together.

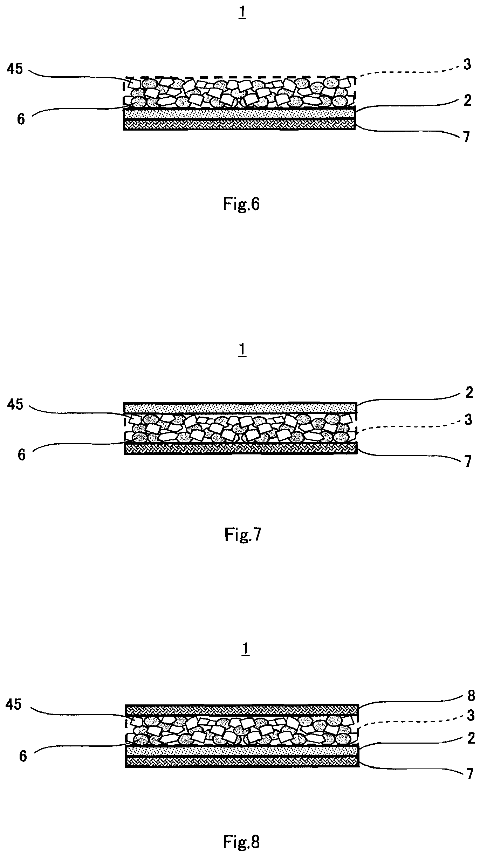

Hereinafter, an example of the porous ion exchanger according to Embodiment 4 is described in detail with reference to Fig. 6.

Fig. 6 is a schematic diagram showing a schematic structure of the porous ion exchanger according to Embodiment 4.

As shown in Fig. 6, the fundamental structure of the porous ion exchanger 1 according to Embodiment 4 is the same as that of the porous ion exchanger 1 according to Embodiment 3. However, the porous ion exchanger 1 according to Embodiment 4 is different from the porous ion exchanger 1 according to Embodiment 3, in that the porous anion-exchange composite 3 of the porous ion exchanger 1 according to Embodiment 4 is produced by sintering the anion-exchange resin particles 6 and the second binder particles 45. It should be noted that the production of the porous anion-exchange composite 3 by the sintering of the anion-exchange resin particles 6 and the second binder particles 45 can be performed in the same method as the method of producing the porous anion-exchange composite 3 of the porous ion exchanger 1 according to Embodiment 1. Therefore, a detailed description of the production of the porous anion-exchange composite 3 by the sintering is omitted.

The porous ion exchanger 1 according to Embodiment 4 with the above-described structure provides the same operational advantages as those provided by the porous ion exchanger 1 according to Embodiment 3.

### [Variation 1]

Next, variations of the porous ion exchanger according to Embodiment 4 are described.

Fig. 7 is a schematic diagram showing a schematic structure of a porous ion exchanger according to Variation 1 of Embodiment 4 of the present invention.

As shown in Fig. 7, the fundamental structure of the porous ion exchanger according to Variation 1 of Embodiment 4 is the same as that of the porous ion exchanger 1 according to Embodiment 4. However, the porous ion exchanger according to Variation 1 of Embodiment 4 is different from the porous ion exchanger 1 according to Embodiment 4 in the following point: in the porous ion exchanger according to Variation 1 of Embodiment 4, a main surface of the first substrate 7 is joined to one main surface of the porous anion-exchange composite 3, the one main surface being not joined to the porous cation-exchange composite 2.

The porous ion exchanger 1 according to Variation 1 with the above-described structure provides the same operational advantages as those provided by the porous ion exchanger 1 according to Embodiment 4.

### [Variation 2]

Fig. 8 is a schematic diagram showing a schematic structure of a porous ion exchanger according to Variation 2 of Embodiment 4 of the present invention.

As shown in Fig. 8, the fundamental structure of the porous ion exchanger according to Variation 2 of Embodiment 4 is the same as that of the porous ion exchanger 1 according to Embodiment 4. However, the porous ion exchanger according to Variation 2 of Embodiment 4 is different from the porous ion exchanger 1 according to Embodiment 4, in that the porous ion exchanger according to Variation 2 includes the second substrate 8. It should be noted that since the structure of the second substrate 8 of the porous ion exchanger 1 according to Variation 2 of Embodiment 4 is the same as the structure of the second substrate 8 of the porous ion exchanger 1 according to the variation of Embodiment 2, a detailed description of the second substrate 8 is omitted.

The porous ion exchanger 1 according to Variation 2 with the above-described structure provides the same operational advantages as those provided by the porous ion exchanger 1 according to Embodiment 4. Since the porous ion exchanger 1 according to Variation 2 includes the second substrate 8, the surface of the porous anion-exchange composite 3 is protected by the second substrate 8. Accordingly, the porous ion exchanger 1 according to Variation 2 can further suppress the detachment of the cation-exchange resin particles 4 or the anion-exchange resin particles 6, and further suppress a decrease in ion exchange capacity, as compared to the porous ion exchanger 1 according to Embodiment 4.

### (Embodiment 5)

A water treatment device according to Embodiment 5 of the present invention serves as an example where the water treatment device includes: the porous ion exchanger according to any one of Embodiments 1, 2 and 4 (not according to the present invention) and 3 (according to the present invention) (and the variations thereof); a casing provided with a water inlet and a water outlet; and at least one pair of electrodes disposed within the casing. The porous ion exchanger is disposed between the pair of electrodes.

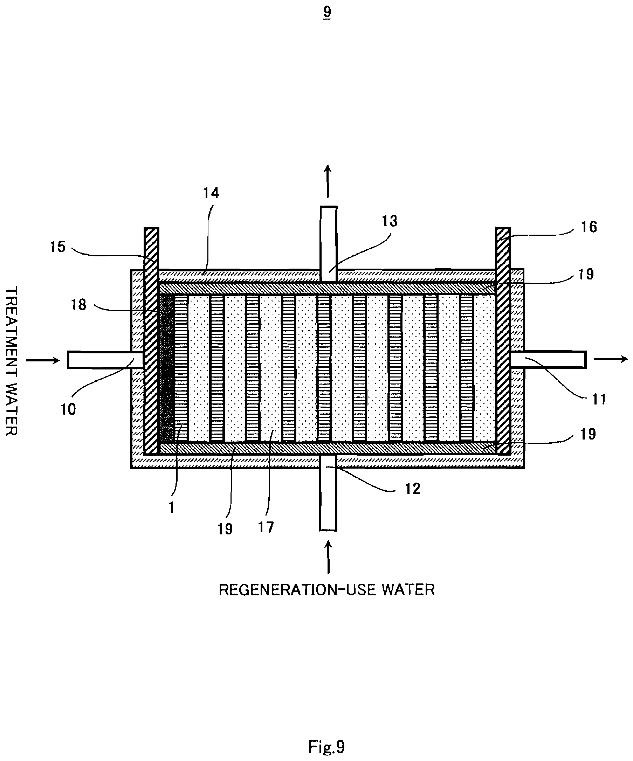

Hereinafter, an example of the water treatment device according to Embodiment 5 is described in detail with reference to Fig. 9.

### [Configuration of Water Treatment Device]

Fig. 9 is a schematic diagram showing a schematic configuration of the water treatment device according to Embodiment 5 of the present invention.

As shown in Fig. 9, a water treatment device 9 according to Embodiment 5 of the present invention includes: porous ion exchangers 1 according to any one of Embodiments 1 to 4 (and the variations thereof); a casing 14; and a pair of electrodes 15 and 16. The casing 14 is provided with a treatment water inlet 10, a treatment water outlet 11, a regeneration-use water inlet 12, and a regeneration-use water outlet 13.

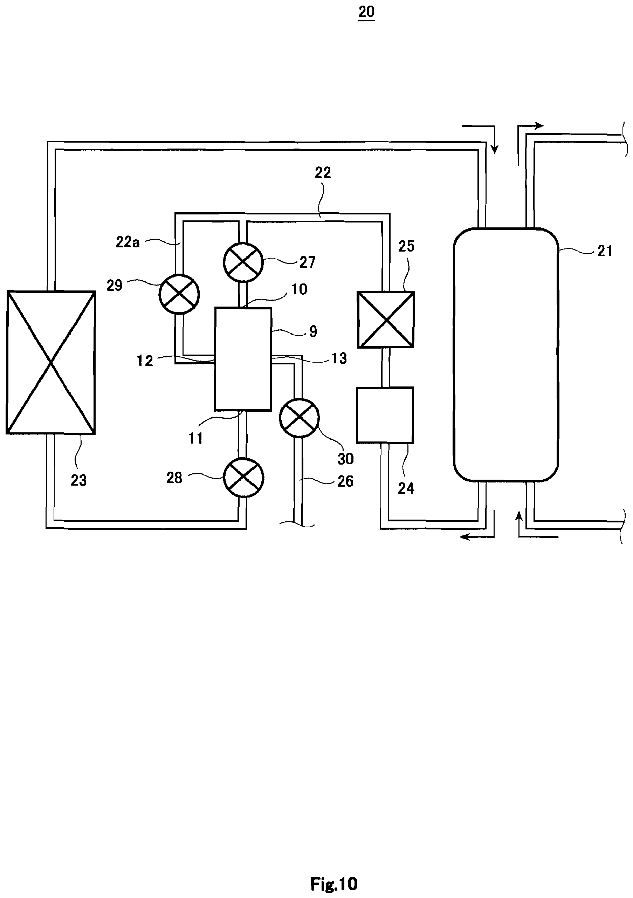

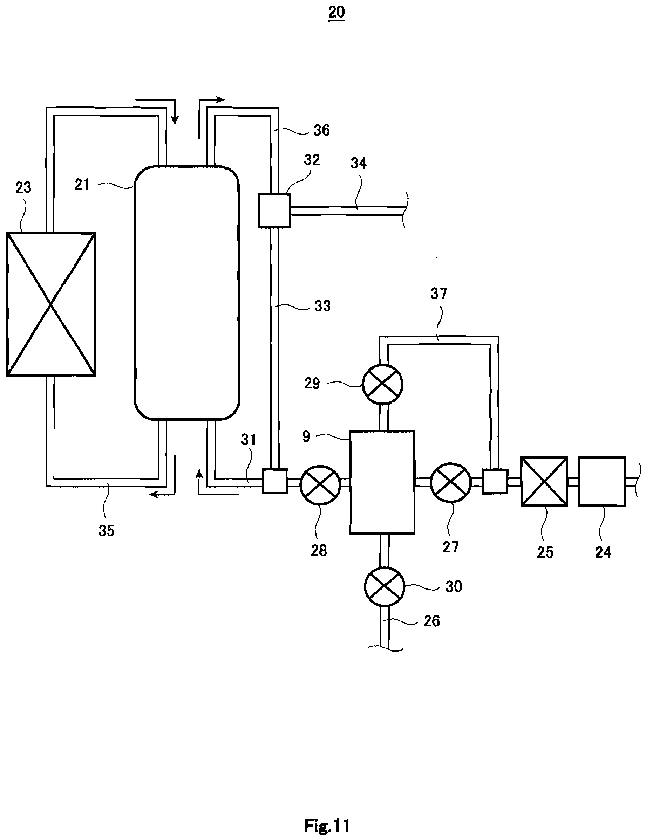

To be specific, the treatment water inlet 10 is provided at one of a pair of opposite sides of the casing 14 and the treatment water outlet 11 is provided at the other one of the pair of opposite sides of the casing 14, such that treatment water flows in a direction extending along the long sides of the casing 14 (i.e., in the left-right direction in the drawing). Also, the regeneration-use water inlet 12 is provided at one of a pair of opposite sides of the casing 14 and the regeneration-use water outlet 13 is provided at the other one of the pair of opposite sides of the casing 14, such that regeneration-use water flows in a direction extending along the short sides of the casing 14 (i.e., in the up-down direction in the drawing). It should be noted that suitable piping is connected to each of the treatment water inlet 10, the treatment water outlet 11, the regeneration-use water inlet 12, and the regeneration-use water outlet 13 (see Fig. 10 and Fig. 11). In the description herein, water from which hardness components and the like are to be removed, or have been removed, by the porous ion exchangers 1 of the water treatment device 9 is referred to as treatment water, and water used for regenerating the ion-exchange resin of the porous ion exchangers 1 is referred to as regeneration-use water.

Plate-shaped electrodes 15 and 16 are provided within the casing 14. The electrode 15 serves as an anode, and the electrode 16 serves as a cathode. A plurality of porous ion exchangers 1 are arranged between the electrode 15 and the electrode 16. Each porous ion exchanger 1 is disposed such that a main surface of the porous cation-exchange composite 2 (see Fig. 1, for example) and a main surface of the electrode 16 serving as a cathode are opposed to each other, and a main surface of the porous anion-exchange composite 3 (see Fig. 1, for example) and a main surface of the electrode 15 serving as an anode are opposed to each other.

It should be noted that each of the electrode 15 and the electrode 16 has an opening, and is configured not to hinder the treatment water from flowing. The electrode 15 and the electrode 16, which are both formed of titanium, are coated with platinum serving as a protection layer having a thickness of 0.2 µm to 0.5 µm since these electrodes always come into contact with water, and thus long-term durability is obtained.

A spacer member 17 for securing a passage of regeneration-use water is disposed between every adjacent two porous ion exchangers 1. That is, inside the casing 14, the porous ion exchangers 1 and the spacer members 17 are arranged in a stacked manner. The spacer member 17 may be any spacer member, so long as the spacer member 17 does not hinder the regeneration-use water from flowing. In the present embodiment, a net-like mesh sheet formed of fluorocarbon resin ETFE is used as the spacer member 17, and is formed such that the area of the mesh sheet is the same as the area of a main surface of the porous ion exchanger 1.

Inside the casing 14, a pressure-equalizing plate 18 is disposed at the electrode 15 side. The pressure-equalizing plate 18 is formed of porous polyethylene, and the water flow resistance of the pressure-equalizing plate 18 is greater than that of the porous ion exchanger 1. Accordingly, the pressure-equalizing plate 18 causes the treatment water that has flowed into the casing 14 through the treatment water inlet 10 to spread in a direction perpendicular to the flow direction of the treatment water (i.e., spread in a direction along the surface of the pressure-equalizing plate 18), and the treatment water flows through the porous ion exchangers 1 one after another while spreading over the entire surface of each porous ion exchanger 1.

Further, inside the casing 14, a pressure-equalizing plate 19 is disposed between the regeneration-use water inlet 12 and the porous ion exchangers 1 and between the regeneration-use water outlet 13 and the porous ion exchangers 1. Each pressure-equalizing plate 19 is formed of porous polyethylene, and the water flow resistance of the pressure-equalizing plate 19 is greater than that of the porous ion exchanger 1. Accordingly, the pressure-equalizing plate 19 causes the regeneration-use water that has flowed into the casing 14 through the regeneration-use water inlet 12 to spread in a direction perpendicular to the flow direction of the regeneration-use water (i.e., spread in a direction along the surface of the pressure-equalizing plate 19), and the regeneration-use water flows toward the regeneration-use water outlet 13 while spreading over the entire surface of the pressure-equalizing plates 19.

### [Operation of Water Treatment Device]

Next, operations of the water treatment device 9 according to Embodiment 5 are described with reference to Fig. 9 particularly in relation to the flow of water inside the water treatment device 9.

At the time of performing water softening treatment (i.e., water treatment), treatment water flows from the treatment water inlet 10 toward the treatment water outlet 11. That is, the treatment water flows perpendicularly to the membrane surface of the porous ion exchangers 1, and flows through the inside of the porous ion exchangers 1 since each porous ion exchanger 1 is porous. Hardness components (cations) in the treatment water such as calcium and magnesium components come into contact with and adsorb to the cation-exchange resin particles 4 in each porous ion exchanger 1, and thus the hardness components are removed from the treatment water. Similarly, anions such as chloride ions in the treatment water adsorb to the anion-exchange resin particles 6, and are thereby removed from the treatment water. In this manner, the treatment water is softened, and then discharged to the outside of the water treatment device 9 through the treatment water outlet 11.

On the other hand, at the time of regenerating the ion-exchange resin, the regeneration-use water flows from the regeneration-use water inlet 12 toward the regeneration-use water outlet 13. That is, the regeneration-use water flows parallel to the main surfaces of the porous ion exchangers 1. At the time of regenerating the ion-exchange resin, a voltage is applied between the electrodes 15 and 16 in the casing 14.

Accordingly, a potential difference occurs in each porous ion exchanger 1, and water is dissociated at an interface (a joint surface; see Fig. 1, for example) formed by the porous cation-exchange composite 2 and the porous anion-exchange composite 3 of the porous ion exchanger 1. As a result, in each porous ion exchanger 1, hydrogen ions are generated at a surface opposed to the electrode 16 serving as a cathode, i.e., at the porous cation-exchange composite 2 side, and hydroxide ions are generated at a surface opposed to the electrode 15 serving as an anode, i.e., at the porous anion-exchange composite 3 side.

Then, the hardness components (cations) such as calcium ions and magnesium ions adsorbed within the porous cation-exchange composite 2 perform ion exchange with the generated hydrogen ions, and thereby the hardness components are desorbed from the cation-exchange resin particles 4. Thus, the cation-exchange resin particles 4 in the porous cation-exchange composite 2 are regenerated. Similarly, the anions such as chloride ions adsorbed within the porous anion-exchange composite 3 perform ion exchange with the generated hydroxide ions, and thereby the anions are desorbed from the anion-exchange resin particles 6. Thus, the anion-exchange resin particles 6 in the porous anion-exchange composite 3 are regenerated.

It should be noted that the voltage applied between the electrodes 15 and 16 is a DC voltage, and the voltage applied in the present embodiment is in a range from 100 V to 300 V. However, the voltage to be applied may be suitably set in accordance with, for example, the number of porous ion exchangers 1 arranged in the casing 14 and the hardness of the treatment water.

Switching between the water softening treatment (water treatment) operation and the regeneration operation is performed by means of valves (not shown) that are provided upstream from the treatment water inlet 10, downstream from the treatment water outlet 11, upstream from the regeneration-use water inlet 12, and downstream from the regeneration-use water outlet 13.

Since the water treatment device 9 according to Embodiment 5 with the above-described configuration includes the porous ion exchanger 1 according to any one of Embodiments 1 to 4 (and the variations thereof), the water treatment device 9 according to Embodiment 5 provides the same operational advantages as those provided by the porous ion exchanger 1 according to the one of Embodiments 1 to 4 (and the variations thereof).

In the water treatment device 9 according to Embodiment 5, the treatment water is flowed perpendicularly to the main surfaces of the porous ion exchangers 1. This increases a probability that the hardness components in the treatment water such as calcium ions and magnesium ions come into contact with the cation-exchange resin particles 4 included in the porous ion exchangers 1. Accordingly, the ions are efficiently adsorbed to the cation-exchange resin particles 4, and thus the efficiency in softening the treatment water can be improved. Similarly, flowing the treatment water perpendicularly to the main surfaces of the porous ion exchangers 1 increases a probability that the anions in the treatment water such as chloride ions come into contact with the anion-exchange resin particles 6. Accordingly, the ions can be efficiently removed through adsorption to the anion-exchange resin particles 6.

On the other hand, the regeneration-use water flows parallel to the main surfaces of the porous ion exchangers 1. Accordingly, the hardness components (cations) desorbed from the cation-exchange resin particles 4 flow parallel along the main surfaces of the porous ion exchangers 1. This makes it possible to suppress the desorbed hardness components from being re-adsorbed to the cation-exchange resin particles 4, thereby improving the regeneration efficiency.

Similarly, since the regeneration-use water flows parallel to the main surfaces of the porous ion exchangers 1, the anions such as chloride ions desorbed from the anion-exchange resin particles 6 flow parallel along the main surfaces of the porous ion exchangers 1. This makes it possible to suppress the desorbed anions such as chloride ions from being re-adsorbed to the anion-exchange resin particles 6, thereby improving regeneration efficiency.

Further, since the water treatment device 9 according to Embodiment 5 includes the pressure-equalizing plate 18, the pressure-equalizing plate 18 functions at the time of performing water softening treatment (water treatment), so that the treatment water flows in a manner to spread over the entire surface of each porous ion exchanger 1, and thus the treatment water can be flowed uniformly over the entire porous ion exchanger 1. This further increases a probability that the cations, which are hardness components, come into contact with the cation-exchange resin particles 4 in the porous ion exchanger 1, thereby making it possible to further improve the efficiency in softening the water to be treated.

Similarly, since the pressure-equalizing plate 18 functions at the time of performing water treatment so that the treatment water can be flowed uniformly over the entire porous ion exchanger 1, a probability that the anions come into contact with the anion-exchange resin particles 6 in the porous ion exchanger 1 is further increased, and thus the adsorption efficiency for the water to be treated can be further improved.

Although in Embodiment 5 the porous ion exchangers 1 are arranged within the casing 14 such that the main surfaces of the porous ion exchangers 1 are perpendicular to the flow direction of the treatment water, the arrangement is not thus limited. Alternatively, the porous ion exchangers 1 may be arranged within the casing 14 such that the main surfaces of the porous ion exchangers 1 are parallel to the flow direction of the treatment water.

In such a case, it is preferred that each porous ion exchanger 1 is formed such that the porous ion exchanger 1 is long in the flow direction of the treatment water. This makes it possible to allow more treatment water to come into contact with the porous ion exchanger 1, and thus ions can be removed from the treatment water more efficiently.

Further, in this case, it is preferred that the flow direction of the regeneration-use water coincides with the direction in which the short sides of each porous ion exchanger 1 extend. This makes it possible to suppress, at the time of regenerating the ion-exchange resin, the previously desorbed ions from being re-adsorbed to the ion-exchange resin, and thus the regeneration of the ion-exchange resin can be performed more efficiently.

### [Embodiment 6]

A hot water supply apparatus according to Embodiment 6 of the present invention serves as an example where the hot water supply apparatus includes the water treatment device according to Embodiment 5.

Hereinafter, an example of the hot water supply apparatus according to Embodiment 6 is described in detail with reference to Fig. 10.

### [Configuration of Hot Water Supply Apparatus]

Fig. 10 is a schematic diagram showing a schematic configuration of the hot water supply apparatus according to Embodiment 6 of the present invention.

As shown in Fig. 10, a hot water supply apparatus 20 according to Embodiment 6 of the present invention includes the water treatment device 9 according to Embodiment 5 and a hot water tank 21. Water piping 22 is connected to the hot water tank 21. Specifically, the upstream end of the water piping 22 is connected to the lower part of the hot water tank 21, and the downstream end of the water piping 22 is connected to the upper part of the hot water tank 21. Moreover, piping for supplying water to the hot water tank 21 is connected to the lower part of the hot water tank 21, and piping for supplying high-temperature water stored in the hot water tank 21 to the outside (e.g., a household bathroom) is connected to the upper part of the hot water tank 21.

A water heating unit 23 is provided along the water piping 22. The water heating unit 23 herein is configured as a heat exchanger. However, as an alternative, the water heating unit 23 may be configured as a combustor such as a burner. Accordingly, low-temperature water stored in the lower part of the hot water tank 21 can be heated by the water heating unit 23, and then the resultant high-temperature water can be supplied to the upper part of the hot water tank 21.

On the water piping 22, the water treatment device 9 is provided upstream from the water heating unit 23. To be more specific, the water piping 22 is connected to the treatment water inlet 10 and the treatment water outlet 11 of the water treatment device 9. Piping 22a branching off from the water piping 22 is connected to the regeneration-use water inlet 12 of the water treatment device 9. Further, drain piping 26 is connected to the regeneration-use water outlet 13 of the water treatment device 9. Accordingly, hardness component-containing water, which is produced at the time of regenerating the ion-exchange resin of the water treatment device 9, can be discharged to the outside of the hot water supply apparatus 20 through the drain piping 26.

On the water piping 22, a filtration filter 24 and activated carbon 25 are provided upstream from the water treatment device 9, such that the filtration filter 24 is positioned upstream from the activated carbon 25. By means of the filtration filter 24 and the activated carbon 25, suspended matter, free chlorine, etc., are removed from the water.

On the water piping 22, a valve 27 is provided between a branching point (where the piping 22a is connected to the water piping 22) and the treatment water inlet 10 of the water treatment device 9. Further, on the water piping 22, a valve 28 is provided between the water heating unit 23 and the treatment water outlet 11 of the water treatment device 9. A valve 29 is provided along the piping 22a. A valve 30 is provided along the drain piping 26. It should be noted that the opening and closing of the valves 27 to 30 may be controlled by a controller which is not shown, or may be performed by a user of the hot water supply apparatus 20. The opening and closing of the valves 27 to 30 are performed in conjunction with a boil-up operation of the hot water supply apparatus 20.

### [Operation of Hot Water Supply Apparatus]

Next, operations of the hot water supply apparatus 20 according to Embodiment 6 are described. It should be noted that the description below is given on the assumption that unsoftened water is stored in the hot water tank 21.

Water treatment (water softening treatment) is performed when the boil-up operation of the hot water supply apparatus 20 is performed. Specifically, by opening the valves 27 and 28, the water in the hot water tank 21 is introduced into the water treatment device 9 through the water piping 22. Here, the valves 29 and 30 are kept closed. The water introduced into the water treatment device 9 contains ionized calcium carbonate which is a hardness component. The supply of water from the hot water tank 21 to the water treatment device 9 is performed by means of a water delivery unit such as a pump, which is not shown.

At the time, DC voltages are applied to the electrodes disposed in the casing 14, such that a positive voltage is applied to the electrode 16 at the porous cation-exchange composite 2 side and a negative voltage is applied to the electrode 15 at the porous anion-exchange composite 3 side.

As a result, calcium ions in the raw water enter the porous cation-exchange composite 2 and carbonate ions in the raw water enter the porous anion-exchange composite 3 by electrophoresis. Then, the calcium ions perform ion exchange with hydrogen ions of a strongly acidic ion-exchange group -SO₃H in the porous cation-exchange composite 2, and the carbonate ions perform ion exchange with hydroxide ions of a strongly basic ion-exchange group -NR₃OH in the porous anion-exchange composite 3.

In this manner, the hardness components in the water within the water treatment device 9 are removed, and the water is softened. The softened water then flows out of the treatment water outlet 11 of the water treatment device 9 into the water heating unit 13 through the water piping 22. The treated water that has flowed into the water heating unit 23 is heated and boiled up. Since the hardness components have been eliminated from the heated treated water, adhesion of scales such as calcium carbonate and magnesium sulfate to the inner surface of the water piping 22 is suppressed.

Then, the hot water boiled up in the water heating unit 23 flows through the water piping 22 and is introduced into the upper part of the hot water tank 21. In a case where a user uses the hot water in a bathroom or the like (not shown), the hot water stored in the upper part of the hot water tank 21 is supplied to a bathtub, for example.

Although the above description describes a case where a DC voltage is applied between the electrodes 15 and 16 for water softening, the hardness components can be removed without performing the voltage application if the desorption capacity of the porous ion exchanger 1 is increased.

Next, the regeneration treatment of the water treatment device 9 is performed while the boil-up operation of the hot water supply apparatus 10 is stopped.

While the boil-up operation is stopped, the valves 27 and 28 are in a closed state, and the valves 29 and 30 are in an opened state. Then, a fixed amount of water supplied from the lower part of the hot water tank 21 is introduced into the water treatment device 9 through the regeneration-use water inlet 12.

In the water treatment device 9, voltages are applied to the electrodes 15 and 16, the voltages having polarities that are reversed from the polarities of the voltages applied to the electrodes at the time of performing water softening. That is, a positive voltage is applied to the electrode 15 at the porous anion-exchange composite 3 side, and a negative voltage is applied to the electrode 16 at the porous cation-exchange composite 2 side.

When the voltages are applied to both sides of the porous ion exchanger 1, ion components at the interface (joint surface; see Fig. 1, for example) between the porous cation-exchange composite 2 and the porous anion-exchange composite 3 decrease, and at some point, water is dissociated and hydrogen ions and hydroxide ions are generated. In the porous cation-exchange composite 2, calcium ions that have previously gone through ion exchange at the time of water softening perform ion exchange with the generated hydrogen ions, and thus regeneration is performed and the calcium ions are released.

Meanwhile, in the porous anion-exchange composite 3, carbonate ions that have previously gone through ion exchange at the time of water softening perform ion exchange with the generated hydroxide ions, and thus regeneration is performed and the carbonate ions are released.

As described above, water dissociation and membrane regeneration are performed by applying voltages to both sides of the porous ion exchanger 1, the voltages having polarities that are reversed from the polarities of the voltages applied to both sides of the porous ion exchanger 1 at the time of performing water softening. Since the porous ion exchanger 1 includes ion-exchange resin particles, the area of the interface between the porous cation-exchange composite 2 and the porous anion-exchange composite 3 can be made large and water dissociation can be performed efficiently. Therefore, the regeneration of the ion-exchange resin can be performed with low power consumption.

After each porous ion exchanger 1 is regenerated through the voltage application which is continued for a certain period of time, water containing hardness components released in the water treatment device 9 is discharged to the outside through the drain piping 26. In this manner, the regeneration of the water treatment device 9 is performed.

Although the regeneration operation may be performed by continuously flowing water with the valves 29 and 30 opened as described above, the regeneration operation may be performed as a batch operation as described below.

After each porous ion exchanger 1 is regenerated through voltage application continued for a certain period of time with the valves 29 and 30 closed, a fixed amount of water is introduced into the water softening treatment device 9 from the hot water tank 21 with the valves 29 and 30 opened, so that the water that has been used for the regeneration is discharged through the drain piping 26. The water treatment device 9 can be regenerated by repeating such an operation a few times.

By regenerating the ion-exchange resin through the batch operation in the above manner, the amount of water discharged at the time of performing the regeneration can be reduced. Since the regeneration of the porous ion exchanger 1 is performed while the boil-up operation is stopped, there is not a situation where the boil-up operation is interrupted due to the regeneration operation. This eliminates a time loss in the boil-up operation due to the regeneration operation. Moreover, since the water softening and the regeneration are performed in the water treatment device 9, it is not necessary to install a separate electrolyzer. This makes it possible to simplify the apparatus configuration and reduce the size of the apparatus.

Since the hot water supply apparatus 20 according to Embodiment 6 with the above-described configuration includes the water treatment device 9 according to Embodiment 5, the hot water supply apparatus 20 provides the same operational advantages as those provided by the water treatment device 9 according to Embodiment 5 and those provided by one of Embodiments 1 to 4 (and the variations thereof).

In the hot water supply apparatus 20 according to Embodiment 6, the valves 27 and 28 are opened and the valves 29 and 30 are closed while the water treatment is performed. Accordingly, the treatment water flowing at the time of performing water treatment will not flow out of the regeneration-use water inlet 12 and the regeneration-use water outlet 13. Also, the valves 29 and 30 are opened and the valves 27 and 28 are closed while the ion-exchange resin is regenerated. Accordingly, the regeneration-use water flowing at the time of performing regeneration will not flow out of the treatment water inlet 10 and the treatment water outlet 11. Therefore, the water flowing at the time of performing water softening treatment and the water flowing at the time of performing regeneration both spread uniformly, which allows the hot water supply apparatus 20 according to Embodiment 6 to perform water softening treatment and regeneration treatment with improved efficiency.

In the hot water supply apparatus 20 according to Embodiment 6, the filtration filter 24 is provided upstream from the water treatment device 9. Accordingly, rust or other insoluble materials in the raw water can be removed, which makes it possible to protect the porous ion exchanger 1 and maintain its performance. Moreover, the activated carbon 16 is provided upstream from the water treatment device 9. Accordingly, free chlorine in the water can be removed, which makes it possible to suppress degradation of the porous ion exchanger 1 and maintain its performance.

### (Embodiment 7)

A hot water supply apparatus according to Embodiment 7 of the present invention serves as another example where the hot water supply apparatus includes the water treatment device according to Embodiment 5.

Hereinafter, an example of the hot water supply apparatus according to Embodiment 7 is described in detail with reference to Fig. 11.

### [Configuration of Hot Water Supply Apparatus]

Fig. 11 is a schematic diagram showing a schematic configuration of the hot water supply apparatus according to Embodiment 7 of the present invention.

As shown in Fig. 11, the hot water supply apparatus 20 according to Embodiment 7 of the present invention includes the water treatment device 9 according to Embodiment 5 and the hot water tank 21. Piping 35 is connected to the hot water tank 21, and the water heating unit 23 is provided along the piping 35.

Feed-water piping 31 is connected to the lower part of the hot water tank 21. The upstream end of hot water supply piping 36 is connected to the upper part of the hot water tank 21, and the downstream end of the hot water supply piping 36 is connected to a mixing valve 32. The downstream end of mixing piping 33 is connected to the mixing valve 32, and the upstream end of the mixing piping 33 is connected to a non-end portion of the feed-water piping 31. A mixing passage 34 is connected to the mixing valve 32.

The mixing valve 32 is configured to mix high-temperature water supplied from the inside of the hot water tank 21 through the hot water supply piping 36 with water supplied from the feed-water piping 31. By means of the mixing valve 32, a user of the hot water supply apparatus 20 mixes the high-temperature water stored in the hot water tank 21 with the water supplied from the feed-water piping 31 so that the temperature of the mixed hot water will become a set desired temperature, and then the mixed hot water is supplied to a bathtub or the like through the mixing passage 34.

The filtration filter 24, the activated carbon 25, and the water treatment device 9 are provided on the feed-water piping 31 so as to be positioned upstream from a point where the mixing piping 33 is connected to the feed-water piping 31, such that the filtration filter 24 is positioned most upstream and the water treatment device 9 is positioned most downstream among the filtration filter 24, the activated carbon 25, and the water treatment device 9. The valve 27 is provided on the feed-water piping 31 between the drain piping 26 and the water treatment device 9, and the valve 28 is provided on the feed-water piping 31 between the water treatment device 9 and the point where the mixing piping 33 is connected to the feed-water piping 31.

The upstream end of piping 37 is connected to the feed-water piping 31 at a position between the activated carbon 25 and the valve 27, and the downstream end of the piping 37 is connected to the regeneration-use water inlet 12 (not shown in Fig. 11) of the water treatment device 9. The valve 29 is provided along the piping 37. Further, the drain piping 26 is connected to the regeneration-use water outlet 13 (not shown in Fig. 11) of the water treatment device 9, and the valve 30 is provided along the drain piping 26.

It should be noted that since the operations of the hot water supply apparatus 20 according to Embodiment 7 are the same as the operations of the hot water supply apparatus 20 according to Embodiment 6, a detailed description of the operations of the hot water supply apparatus 20 according to Embodiment 7 is omitted.

Since the hot water supply apparatus 20 according to Embodiment 7 with the above-described configuration includes the water treatment device 9 according to Embodiment 5, the hot water supply apparatus 20 according to Embodiment 7 provides the same operational advantages as those provided by the water treatment device 9 according to Embodiment 5 and those provided by one of Embodiments 1 to 4 (and the variations thereof). Further, the hot water supply apparatus 20 according to Embodiment 7 provides the same operational advantages as those provided by the hot water supply apparatus 20 according to Embodiment 6.

In the hot water supply apparatus 20 according to Embodiment 7, water that has been treated by the water treatment device 9 is supplied to the mixing passage 34 through the hot water tank 21 and the mixing piping 33. Therefore, adhesion of scales to the component devices of the hot water supply apparatus 20 are more suppressed compared to the hot water supply apparatus 20 according to Embodiment 6.

Although in the porous ion exchangers 1 according to Embodiments 1 to 4 (and the variations thereof) the porous cation-exchange composite 2 serves as the first porous ion-exchange composite and the porous anion-exchange composite 3 serves as the second porous ion-exchange composite, these embodiments and variations are not thus limited. As an alternative, the porous cation-exchange composite 2 may serve as the second porous ion-exchange composite, and the porous anion-exchange composite 3 may serve as the first porous ion-exchange composite.

In Embodiments 6 and 7, the number of water treatment devices 9 to be used is one. However, as an alternative, a plurality of water treatment devices 9 may be used. With the use of a plurality of water softening treatment devices 9, the water softening treatment and the regeneration treatment can be performed more effectively. If the number of water treatment devices 9 to be used is only one, then the most effective usage of the water treatment device 9 is to perform the regeneration treatment of the water treatment device 9 while the boil-up operation is stopped. If, for example, two water treatment devices 9 are used, then the two devices 9 may be operated such that the water softening treatment is performed alternately by the two devices 9 and the regeneration treatment is also performed alternately by the two devices 9. Such operation allows the water softening treatment and the regeneration treatment to be performed continuously.

### Industrial Applicability

The porous ion exchanger, the water treatment device, the hot water supply apparatus, and the method of producing the porous ion exchanger, according to the present invention, are useful in the field of water treatment since they are capable of efficiently treating a large amount of water and allow the device/apparatus size to be compact.

### Reference Signs List

1 porous ion exchanger
2 porous cation-exchange composite (first porous ion-exchange composite)
3 porous anion-exchange composite (second porous ion-exchange composite)
4 cation-exchange resin particles
5 thermoplastic resin particles (first binder particles)
6 anion-exchange resin particles
7 first substrate
8 second substrate
9 water softening device (water treatment device)
10 treatment water inlet
11 treatment water outlet
12 regeneration-use water inlet
13 regeneration-use water outlet
14 casing
15 electrode
16 electrode
17 casing
20 hot water supply apparatus
45 second binder particles

## Claims

1. A porous ion exchanger comprising:
a first porous ion-exchange composite which is obtained by forming a first mixture, in which water-dispersed or solvent-dispersed first binder particles and first ion-exchange resin particles, which are cation-exchange resin particles, are mixed in paste form, into a sheet shape, and drying the first mixture; and
a second porous ion-exchange composite which is obtained by forming a third mixture, in which water-dispersed or solvent-dispersed second binder particles and second ion-exchange resin particles, which are anion-exchange resin particles, are mixed in paste form, into a sheet shape, and drying the third mixture,
wherein each of the first binder particles and the second binder particles has a particle diameter of 100 nm to 3 µm, and
the porous ion exchanger is obtained by joining the first porous ion-exchange composite and the second porous ion-exchange composite together.

2. The porous ion exchanger according to claim 1, comprising a water-permeable and sheet-shaped first substrate, wherein
the first substrate is joined to the first porous ion-exchange composite.

3. The porous ion exchanger according to claim 2, wherein
the first porous ion-exchange composite is obtained by applying the first mixture onto the first substrate and drying the first mixture.

4. The porous ion exchanger according to claim 2 or claim 3, comprising a water-permeable and sheet-shaped second substrate, wherein
the second substrate is joined to the second porous ion-exchange composite.

5. The porous ion exchanger according to claim 4, wherein
the second porous ion-exchange composite is obtained by applying the third mixture onto the second substrate and drying the third mixture.

6. The porous ion exchanger according to any one of claims 1 to 5, wherein
the first porous ion-exchange composite and the second porous ion-exchange composite are joined together through heating.

7. The porous ion exchanger according to any one of claims 1 to 3, wherein
the second porous ion-exchange composite is obtained by applying the third mixture onto the first porous ion-exchange composite and drying the third mixture, and
the first porous ion-exchange composite and the second porous ion-exchange composite are joined together.

8. The porous ion exchanger according to any one of claims 1, 4, and 5, wherein
the first porous ion-exchange composite is obtained by applying the first mixture onto the second porous ion-exchange composite and drying the first mixture, and
the first porous ion-exchange composite and the second porous ion-exchange composite are joined together.

9. The porous ion exchanger according to any one of claims 1 to 8, wherein
a diameter of the binder particles is less than or equal to a diameter of the first ion-exchange resin particles and a diameter of the second ion-exchange resin particles.

10. The porous ion exchanger according to claim 2 or claim 3, wherein
the first substrate is formed of a nonwoven fabric, and
an opening size of the nonwoven fabric is smaller than a diameter of the first ion-exchange resin particles or a diameter of the second ion-exchange resin particles.

11. The porous ion exchanger according to claim 4 or claim 5, wherein
the second substrate is formed of a nonwoven fabric, and
an opening size of the nonwoven fabric is smaller than a diameter of the first ion-exchange resin particles or a diameter of the second ion-exchange resin particles.

12. A water treatment device comprising:
the porous ion exchanger according to any one of claims 1 to 11;
a casing provided with a water inlet and a water outlet; and
at least one pair of electrodes disposed within the casing, wherein
the porous ion exchanger is disposed between the pair of electrodes.

13. A hot water supply apparatus comprising the water treatment device according to claim 12.

14. A method of producing a porous ion exchanger, comprising:
producing a first porous ion-exchange composite by forming a first mixture, in which water-dispersed or solvent-dispersed first binder particles and first ion-exchange resin particles, which are cation-exchange resin particles, are mixed in paste form, into a sheet shape, and drying the first mixture;
producing a second porous ion-exchange composite by forming a third mixture, in which water-dispersed or solvent-dispersed second binder particles and second ion-exchange resin particles, which are anion-exchange resin particles, are mixed in paste form, into a sheet shape, and drying the third mixture; and
joining the first porous ion-exchange composite and the second porous ion-exchange composite together, wherein
each of the first binder particles and the second binder particles has a particle diameter of 100 nm to 3 µm.

## Patentansprüche

1. Poröser Ionenaustauscher enthaltend:
einen ersten porösen Ionenaustauschverbund, der erhalten wird durch Formen einer ersten Mischung, in der wasserdispergierte oder lösungsmitteldispergierte erste Bindemittelteilchen und erste Ionenaustauschharzteilchen, die Kationenaustauschharzteilchen sind, in Pastenform gemischt werden, zu einer Plattenform und Trocknen der ersten Mischung; und
einen zweiten porösen Ionenaustauschverbund, der erhalten wird durch Formen einer dritten Mischung, in der wasserdispergierte oder lösungsmitteldispergierte zweite Bindemittelteilchen und zweite Ionenaustauschharzteilchen, die Anionenaustauschharzteilchen sind, in Pastenform gemischt werden, zu einer Plattenform und Trocknen der dritten Mischung,
wobei jedes der ersten Bindemittelteilchen und zweiten Bindemittelteilchen einen Teilchendurchmesser von 100 nm bis 3 µm aufweist, und
der poröse Ionenaustauscher durch Verbinden des ersten porösen Ionenaustauschverbunds und des zweiten porösen lonenaustauschverbunds erhalten wird.

2. Poröser Ionenaustauscher nach Anspruch 1, enthaltend ein wasserdurchlässiges und plattenförmiges erstes Substrat, wobei
das erste Substrat mit dem ersten porösen lonenaustauschverbund verbunden ist.

3. Poröser Ionenaustauscher nach Anspruch 2, wobei
der erste poröse lonenaustauschverbund durch Aufbringen der ersten Mischung auf das erste Substrat und Trocknen der ersten Mischung erhalten wird.

4. Poröser Ionenaustauscher nach Anspruch 2 oder Anspruch 3, enthaltend ein wasserdurchlässiges und plattenförmiges zweites Substrat, wobei
das zweite Substrat mit dem zweiten porösen lonenaustauschverbund verbunden ist.

5. Poröser Ionenaustauscher nach Anspruch 4, wobei
der zweite poröse lonenaustauschverbund durch Aufbringen der dritten Mischung auf das zweite Substrat und Trocknen der dritten Mischung erhalten wird.

6. Poröser Ionenaustauscher nach einem der Ansprüche 1 bis 5, wobei
der erste poröse lonenaustauschverbund und der zweite poröse Ionenaustauschverbund durch Erhitzen miteinander verbunden sind.

7. Poröser Ionenaustauscher nach einem der Ansprüche 1 bis 3, wobei
der zweite poröse lonenaustauschverbund durch Aufbringen der dritten Mischung auf den ersten porösen lonenaustauschverbund und Trocknen der dritten Mischung erhalten wird, und
der erste poröse lonenaustauschverbund und der zweite poröse Ionenaustauschverbund miteinander verbunden sind.

8. Poröser Ionenaustauscher nach einem der Ansprüche 1, 4 und 5, wobei
der erste poröse lonenaustauschverbund durch Aufbringen der ersten Mischung auf den zweiten porösen lonenaustauschverbund und Trocknen der ersten Mischung erhalten wird, und
der erste poröse lonenaustauschverbund und der zweite poröse Ionenaustauschverbund miteinander verbunden sind.

9. Poröser Ionenaustauscher nach einem der Ansprüche 1 bis 8, wobei
ein Durchmesser der Bindemittelteilchen kleiner oder gleich einem Durchmesser der ersten lonenaustauschharzteilchen und einem Durchmesser der zweiten lonenaustauschharzteilchen ist.

10. Poröser Ionenaustauscher nach Anspruch 2 oder Anspruch 3, wobei
das erste Substrat aus einem Vliesstoff gebildet ist, und
eine Öffnungsgröße des Vliesstoffs kleiner als ein Durchmesser der ersten lonenaustauschharzteilchen oder ein Durchmesser der zweiten lonenaustauschharzteilchen ist.

11. Poröser Ionenaustauscher nach Anspruch 4 oder Anspruch 5, wobei
das zweite Substrat aus einem Vliesstoff gebildet ist, und
eine Öffnungsgröße des Vliesstoffs kleiner als ein Durchmesser der ersten lonenaustauschharzteilchen oder ein Durchmesser der zweiten lonenaustauschharzteilchen ist.

12. Wasseraufbereitungsvorrichtung enthaltend:
den porösen Ionenaustauscher nach einem der Ansprüche 1 bis 11;
ein Gehäuse, das mit einem Wassereinlass und einem Wasserauslass versehen ist; und
mindestens ein Elektrodenpaar, das innerhalb des Gehäuses angeordnet ist, wobei
der poröse Ionenaustauscher zwischen dem Elektrodenpaar angeordnet ist.

13. Heißwasserversorgungsvorrichtung enthaltend die Wasseraufbereitungsvorrichtung nach Anspruch 12.

14. Verfahren zum Herstellen eines porösen Ionenaustauschers, enthaltend:
Herstellen eines ersten porösen Ionenaustauschverbunds, durch Formen einer ersten Mischung, in der wasserdispergierte oder lösungsmitteldispergierte erste Bindemittelteilchen und erste Ionenaustauschharzteilchen, die Kationenaustauschharzteilchen sind, in Pastenform gemischt werden, zu einer Plattenform und Trocknen der ersten Mischung;
Herstellen eines zweiten porösen Ionenaustauschverbunds, durch Formen einer dritten Mischung, in der wasserdispergierte oder lösungsmitteldispergierte zweite Bindemittelteilchen und zweite Ionenaustauschharzteilchen, die Anionenaustauschharzteilchen sind, in Pastenform gemischt werden, zu einer Plattenform und Trocknen der dritten Mischung; und
Verbinden des ersten porösen lonenaustauschverbunds und des zweiten porösen Austauschverbunds miteinander, wobei
jedes der ersten Bindemittelteilchen und der zweiten Bindemittelteilchen einen Teilchendurchmesser von 100 nm bis 3 µm aufweist.

## Revendications

1. Échangeur d'ions poreux comprenant:
un premier composite échangeur d'ions poreux qui est obtenu par formation d'un premier mélange, dans lequel des premières particules de liant dispersées dans l'eau ou dispersées dans un solvant et des premières particules de résine échangeuse d'ions, qui sont des particules de résine échangeuse de cations, sont mélangées sous forme de pâte, en une forme de feuille, et séchage du premier mélange; et
un second composite échangeur d'ions poreux qui est obtenu par formation d'un troisième mélange, dans lequel des secondes particules de liant dispersées dans l'eau ou dispersées dans un solvant et des secondes particules de résine échangeuse d'ions, qui sont des particules de résine échangeuse d'anions, sont mélangées sous forme de pâte, en une forme de feuille, et séchage du troisième mélange,
dans lequel chacune des premières particules de liant et des secondes particules de liant a un diamètre de particule de 100 nm à 3 µm, et
l'échangeur d'ions poreux est obtenu par liaison du premier composite échangeur d'ions poreux et du second composite échangeur d'ions poreux l'un à l'autre.

2. Échangeur d'ions poreux selon la revendication 1, comprenant un premier substrat perméable à l'eau et en forme de feuille, dans lequel
le premier substrat est lié au premier composite échangeur d'ions poreux.

3. Échangeur d'ions poreux selon la revendication 2, dans lequel
le premier composite échangeur d'ions poreux est obtenu par application du premier mélange sur le premier substrat et séchage du premier mélange.

4. Échangeur d'ions poreux selon la revendication 2 ou la revendication 3, comprenant un second substrat perméable à l'eau et en forme de feuille, dans lequel
le second substrat est lié au second composite échangeur d'ions poreux.

5. Échangeur d'ions poreux selon la revendication 4, dans lequel
le second composite échangeur d'ions poreux est obtenu par application du troisième mélange sur le second substrat et séchage du troisième mélange.

6. Échangeur d'ions poreux selon l'une quelconque des revendications 1 à 5, dans lequel
le premier composite échangeur d'ions poreux et le second composite échangeur d'ions poreux sont liés l'un à l'autre par chauffage.

7. Échangeur d'ions poreux selon l'une quelconque des revendications 1 à 3, dans lequel
le second composite échangeur d'ions poreux est obtenu par application du troisième mélange sur le premier composite échangeur d'ions poreux et séchage du troisième mélange, et
le premier composite échangeur d'ions poreux et le second composite échangeur d'ions poreux sont liés l'un à l'autre.

8. Échangeur d'ions poreux selon l'une quelconque des revendications 1, 4 et 5, dans lequel
le premier composite échangeur d'ions poreux est obtenu par application du premier mélange sur le second composite échangeur d'ions poreux et séchage du premier mélange, et
le premier composite échangeur d'ions poreux et le second composite échangeur d'ions poreux sont liés l'un à l'autre.

9. Échangeur d'ions poreux selon l'une quelconque des revendications 1 à 8, dans lequel
un diamètre des particules de liant est inférieur ou égal à un diamètre des premières particules de résine échangeuse d'ions et un diamètre des secondes particules de résine échangeuse d'ions.

10. Échangeur d'ions poreux selon la revendication 2 ou la revendication 3, dans lequel
le premier substrat est formé d'un tissu non tissé, et
une taille d'ouverture du tissu non tissé est inférieure à un diamètre des premières particules de résine échangeuse d'ions ou un diamètre des secondes particules de résine échangeuse d'ions.

11. Échangeur d'ions poreux selon la revendication 4 ou la revendication 5, dans lequel
le second substrat est formé d'un tissu non tissé, et
une taille d'ouverture du tissu non tissé est inférieure à un diamètre des premières particules de résine échangeuse d'ions ou un diamètre des secondes particules de résine échangeuse d'ions.

12. Dispositif de traitement d'eau comprenant:
l'échangeur d'ions poreux selon l'une quelconque des revendications 1 à 11;
un boîtier étant pourvu d'une entrée d'eau et d'une sortie d'eau; et
au moins une paire d'électrodes disposées à l'intérieur du boîtier, dans lequel
l'échangeur d'ions poreux est disposé entre la paire d'électrodes.

13. Appareil d'alimentation en eau chaude comprenant le dispositif de traitement d'eau selon la revendication 12.

14. Procédé de fabrication d'un échangeur d'ions poreux comprenant:
la fabrication d'un premier composite échangeur d'ions poreux par formation d'un premier mélange, dans lequel des premières particules de liant dispersées dans l'eau ou dispersées dans un solvant et des premières particules de résine échangeuse d'ions, qui sont des particules de résine échangeuse de cations, sont mélangées sous forme de pâte, en une forme de feuille, et séchage du premier mélange;
la fabrication d'un second composite échangeur d'ions poreux par formation d'un troisième mélange, dans lequel des secondes particules de liant dispersées dans l'eau ou dispersées dans un solvant et des secondes particules de résine échangeuse d'ions, qui sont des particules de résine échangeuse d'anions, sont mélangées sous forme de pâte, en une forme de feuille, et séchage du troisième mélange; et
la liaison du premier composite échangeur d'ions poreux et du second composite échangeur d'ions poreux l'un à l'autre, dans lequel
chacune des premières particules de liant et des secondes particules de liant a un diamètre de particule de 100 nm à 3 µm.
